**Europäisches Patentamt**

(19) **European Patent Office** (11) Numéro de publication: **0 139 593**

**Office européen des brevets** **B1**

## (12) FASCICULE DE BREVET EUROPÉEN

(45) Date de publication du fascicule du brevet: **27.12.89**

(51) Int. Cl.⁴: **G 06 K 7/06**

(21) Numéro de dépôt: **84402094.1**

(22) Date de dépôt: **18.10.84**

(54) Appareil de lecture de cartes à mémoire électronique.

(30) Priorité: **27.10.83 FR 8317135**

(43) Date de publication de la demande:
**02.05.85 Bulletin 85/18**

(45) Mention de la délivrance du brevet:
**27.12.89 Bulletin 89/52**

(84) Etats contractants désignés:
**AT BE CH DE GB IT LI LU NL SE**

(56) Documents cité:
**FR-A-2 477 303**
**GB-A-2 124 420**
**US-A-4 004 133**
**US-A-4 017 834**

**IBM TECHNICAL DISCLOSURE BULLETIN, vol. 9,
no. 12, mai 1967, pages 1760-1761, New York, US;
G.W. BOWERS, Jr. et al.: "Credit card reader"**

(73) Titulaire: **SCHLUMBERGER INDUSTRIES, 50,
avenue Jean Jaurès, F-92120 Montrouge (FR)**

(72) Inventeur: **Guion, Christian, 28, Allée du Moulin
de Migneaux, F-91370 Verrieres le Buisson (FR)**

(74) Mandataire: **Dronne, Guy, SCHLUMBERGER
INDUSTRIES Centre de Recherches/SMR BP 620-
05, F-92542 Montrouge Cédex (FR)**

## Description

L'invention concerne un appareil pour la lecture de cartes à mémoire électronique.

On sait que les cartes à mémoire peuvent être de deux types principaux : l'information est mémorisée soit sous forme magnétique, soit sous forme électronique. L'invention concerne uniquement ce deuxième cas.

Dans le deuxième type de cartes à mémoire, la mémoire est constituée par un circuit intégré noyé dans la carte et les bornes du circuit intégré sont reliées à des plages de contact qui en général affleurent la surface de la carte. Le circuit intégré comprend la mémoire proprement dite et des circuits de commande associés à la mémoire. Il s'agit essentiellement des circuits de commande de lecture ou d'écriture dans la mémoire, de circuits de décodage, de circuits d'adressage.

La carte ne comporte pas, elle-même, de source d'alimentation électrique et c'est donc l'appareil de lecture qui doit en même temps alimenter le circuit intégré. En outre, lors de son exploitation, des transferts d'informations s'effectuent sous forme de signaux électriques entre le lecteur de cartes et le circuit intégré de la carte. Pour cela, l'appareil de lecture comporte des éléments de contact électrique qui font en général saillie dans un passage servant à l'introduction et au guidage de la carte, et qui sont destinés à établir une liaison électrique avec les plages de contact de la carte. Lorsqu'elles sont établie, ces liaisons électriques assurent donc l'alimentation du circuit intégré et le transfert des signaux.

Lors de l'introduction de la carte dans l'appareil de lecture, les éléments de contact de l'appareil de lecture et les plages de contact de la carte se recouvrent progressivement les uns les autres par suite du déplacement de la carte.

Quelles que soient les précautions prises dans la réalisation des éléments de contact pour que ceux-ci présentent la même configuration spatiale que les plages de contact de la carte, et compte tenu du fait que des plages de contact ont nécessairement une certaine longueur, selon le sens de déplacement de la carte, les liaisons électriques risquent de s'établir dans un ordre anarchique lors de l'introduction de la carte. En d'autre termes, les signaux électriques, qu'il s'agisse de l'alimentation électrique ou du transfert des informations, risquent d'être appliqués au circuit intégré de la carte dans un ordre non convenable ou anarchique. Il peut en résulter une détérioration du circuit intégré de la carte ou un mauvais fonctionnement.

Le brevet français 2 477 307 décrit un lecteur de cartes à mémoire électronique dans lequel l'introduction de la carte provoque le pivotement d'une tête de connexion pour amener celle-ci en contact avec les plages de contact de la carte. Le mouvement relatif entre la carte et la tête de connexion ne permet pas de résoudre le problème énoncé ci-dessus.

La revue IBM Technical Disclosure Bulletin Vol. 9 N° 12 Mai 1967 décrit un lecteur optique de cartes perforées. Le bord avant de la carte agit sur un organe mécanique qui commande l'activation du détecteur optique.

Pour remédier à cet inconvénient, l'un des objets de l'invention est de fournir un appareil de lecture de cartes à mémoire électronique qui évite les risques d'application anarchique des signaux électriques correspondant à l'alimentation ou aux informations, aux bornes du circuit intégré lors de la phase d'introduction de la carte dans l'appareil de lecture.

Pour atteindre ce but, l'invention concerne un appareil de lecture de cartes à mémoire électronique comprenant un passage d'introduction d'une carte munie d'une pluralité de plages de contact électrique et d'un circuit intégré relié aux dites plages, une pluralité d'éléments de contact formés par des éléments conducteurs élastiques fixes et disposés dans ledit passage pour que chacun soit en contact avec une desdites plages de contact lorsque ladite carte est en position de lecture, une source d'alimentation électrique et un circuit de traitement pour envoyer des signaux d'information vers la carte par lesdits éléments de contact électrique, des moyens détecteurs disposés à l'intérieur dudit passage pour détecter si ladite carte est dans une position requise, caractérisé en ce que lesdits moyens de détection délivrent un signal électrique de détection lorsque le bord antérieur de ladite carte est dans la position requise et en ce que ledit signal de détection commande l'activation des moyens qui ne sont pas actionnés mécaniquement par la carte pour appliquer lesdits signaux et/ou ladite alimentation seulement dans le cas où lesdits moyens de détection ont détecté que la carte est dans la position requise pour laquelle la totalité des connexions électriques entre lesdites plages de contact sont effectivement réalisées, par quoi lesdits signaux et/ou ladite alimentation sont effectivement appliqués auxdits éléments de contact dans l'ordre requis.

Ainsi l'application à la carte des signaux d'information et/ou de l'alimentation électrique ne se fait que lorsque la totalité des connexions électriques est réalisée. Ainsi le circuit intégré peut recevoir l'ensemble des signaux électriques dans l'ordre voulu.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel:

- La figure 1 est une vue partielle en coupe verticale de l'appareil de lecture;

- La figure 2 est une vue partielle de dessus montrant l'ensemble des éléments de contact de l'appareil de lecture et le circuit électronique associé selon un premier mode de réalisation.

- la figure 3 représente une variante de réalisation du circuit électronique selon le mode de réalisation de la figure 2;
- la figure 4 montre une première variante de réalisation du détecteur de position de la carte;
- et la figure 5 montre une deuxième variante de réalisation du détecteur de position de la carte.

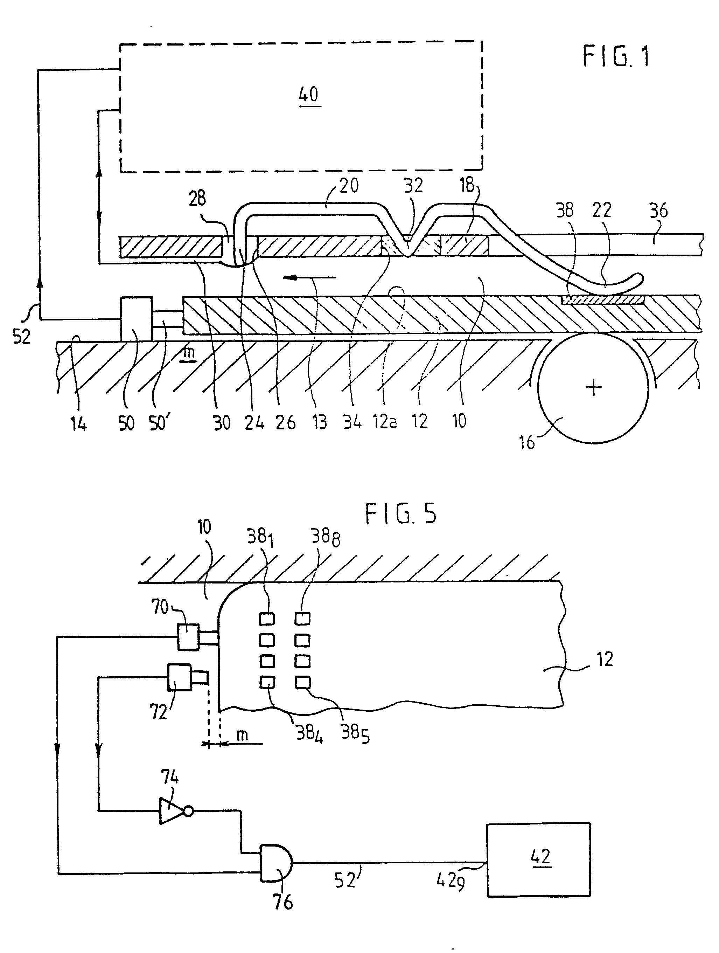

La figure 1 représente de façon simplifiée une vue en coupe verticale d'une partie de l'appareil de lecture.

On a représenté sur la figure 1 une partie d'un passage 10 d'un appareil de lecture de cartes dans lequel peut être introduite une carte 12 selon la direction répérée par la flèche 13. Ce passage est limité inférieurement par une cloison 14 sur laquelle peut glisser la carte 12. On a également symbolisé par un galet 16 des moyens d'entraînement de la carte qui peuvent être commandés par un moteur dans un sens et dans l'autre pour permettre l'introduction de la carte dans sa position de lecture et l'éjection de la carte. A ce galet 16 peuvent être associés des contre-galets non représentés. Avec d'autres appareils de lecture de cartes, l'introduction de la carte est manuelle.

L'invention concerne également un tel type de lecteur de cartes.

A la partie supérieure du passage 10, on trouve, dans la zone de lecture, une autre cloison constituée, par exemple et de préférence, par une plaquette isolante 18, sur laquelle est monté un connecteur.

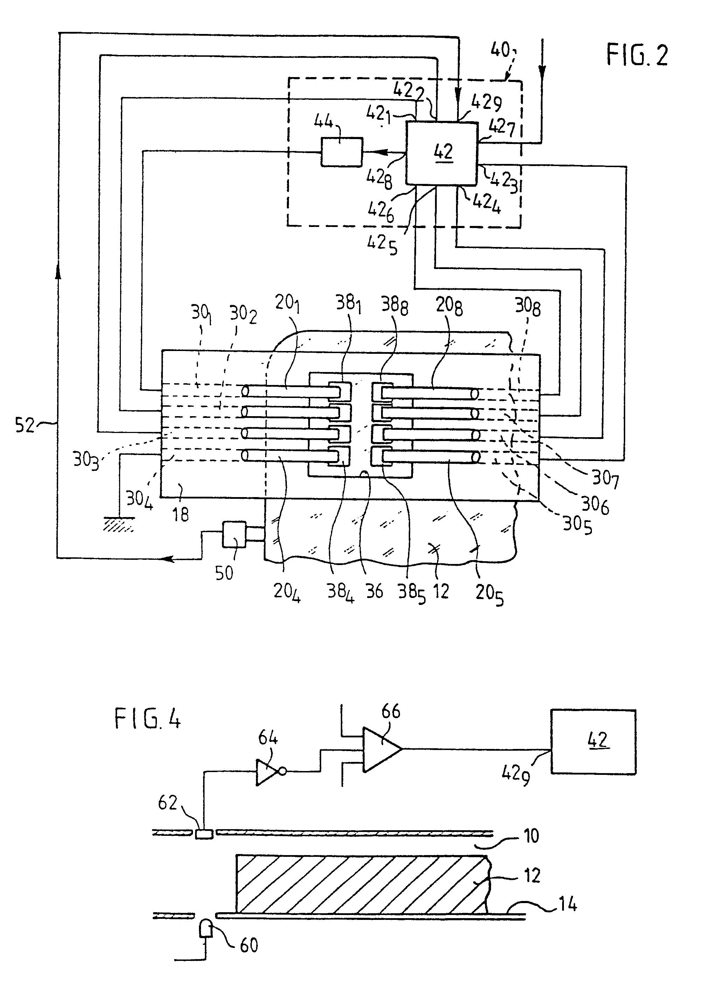

Sur cette plaquette 18 sont montés des éléments de contact électrique tels que 20, constitués chacun par une lame conductrice dont l'extrémité 22 est flexible et fait saillie à l'intérieur du passage 10. Pour simplifier la figure 1, l'on a représenté un seul élément de contact. Comme on le verra mieux en liaison avec la figure 2, le lecteur comporte en fait, de préférence, huit éléments de contact. Le passage 10 comprend également des éléments de guidage latéral de la carte, non représentés.

Dans l'exemple représenté sur la figure 1, une extrémité coudée 24 de chaque lame 20 pénètre dans un premier orifice 26 ménagé dans le substrat isolant 18 et est noyée dans un remplissage 28 en matériau conducteur afin de relier électriquement la lame 20 à une piste conductrice 30 déposée sur une face de la plaquette isolante 18. L'ancrage de la lame 20 dans la plaquette est complété par une portion coudée 32 de la lame qui est scellée dans un orifice 34 ménagé dans la plaquette. L'extrémité libre 22 de la lame formant le contact traverse le substrat isolant par une ouverture 36.

Comme on le voit sur la figure 1, la carte 12 comporte dans sa face supérieure 12a des plages de contact électrique telle que 38. Une seule est représentée sur la figure 1.

Comme on l'a déjà expliqué, les éléments de contact 20 servent à alimenter cette carte et éventuellement à lire et écrire dans la mémoire de la carte constituée par un circuit intégré.

La carte 12 comporte plusieurs plages de contact $38_1$ à $38_8$. Ces plages ont, par exemple, une longueur de 2,3 mm selon le sens de déplacement de la carte dans l'appareil de lecture. Dans l'exemple décrit, elle en comporte huit disposées sur deux lignes. En conséquence, le lecteur de cartes doit comporter également huit lames de contact $20_1$ à $20_8$. C'est ce que l'on a représenté sur la figure 2. Compte tenu de la faible distance séparant les deux lignes de plages de contact, les lames de contact 20 sont disposées sur deux lignes et tête-bêche de telle façon que les extrémités 22 des lames reproduisent aussi exactement que possible la même disposition spatiale que les plages de contact $38_1$ à $38_8$ de la carte. Chaque lame $20_1$ à $20_8$ est connectée à une piste conductrice $30_1$ à $30_8$ qui est elle-même reliée au circuit de traitement de l'appareil de lecture.

Selon l'invention, l'on trouve également à l'intérieur de passage 10 un détecteur de position 50 de la carte.

Dans l'exemple représenté sur les figures 1 et 2, ce détecteur de position 50 est constitué par un micro-contact mobile qui délivre par un conducteur 52 un signal électrique lorsque le bord antérieur de la carte 12 vient en contact avec la partie mobile 50' du détecteur. c'est-à-dire lorsque la carte est dans la position de lecture requise. Par exemple, le contacteur 50 est placé de telle manière que le bord antérieur de la carte soit en contact avec lui lorsque la zone médiane de chaque plage de contact $38_1$, à $38_8$, dans le sens de déplacement de la carte, soit au droit de la position idéale des extrémités des éléments de contact $20_1$ à $20_8$. Ainsi, l'on est sûr que le détecteur 50 ne délivre le signal de détection qu'au moment où la totalité des connexions électriques entre les plages de contact et les éléments de contact soit réalisée.

Comme on le voit mieux sur la figure 2, le circuit de traitement du lecteur de cartes, référencé 40, comprend essentiellement un microprocesseur 42 et une source d'alimentation 44.

Dans l'exemple représenté sur la figure 2, la source d'alimentation est reliée à la piste $30_1$, et la piste $30_4$ à la masse. Les autres pisters $30_2$, $30_3$ et $30_5$ à $30_8$ sont reliées aux entrées/sorties $42_1$ à $42_6$ du microprocesseur.

Selon les types de microprocesseurs utilisés dans le lecteur de cartes et dans la carte, et selon les fonctions remplies par la carte, ces entrées-sorties peuvent correspondre à un signal d'horloge, à une alimentation auxiliaire d'une partie du circuit de la carte à la commande du mode lecture ou écriture, et au transit des informations logiques entre la carte et le lecteur de cartes pour lire des informations déjà contenues dans la mémoire ou pour y écrire de nouvelles informations.

Le microprocesseur 42 comporte également une entrée $42_7$, qui lui permet de recevoir des informations introduites directement au niveau du lecteur de cartes, par exemple le code personnel d'identification du détenteur de la carte. Le microprocesseur 42 comporte, en outre, une sortie $42_8$ qui commande l'activation de la source d'alimentation électrique 44.

Le conducteur 52 est relié à une entrée $42_9$ d'activation du microprocesseur 42. Lorsqu'aucun signal de détection n'est appliqué sur cette entrée, c'est-à-dire, lorsque la carte n'est pas dans la position de lecture requise, aucun signal n'est délivré par le microprocesseur 42 sur sorties $42_1$ à $42_6$ et $42_8$. En conséquence, la source d'alimentation 44 ne délivre pas de signal.

Ainsi, aucun signal n'est présent sur les éléments de contact $20_1$ à $20_8$ avant que la carte n'occupe la position de lecture requise, donc avant que l'ensemble des connexions électriques ne soit établi. Lorsque le signal de détection est appliqué à l'entrée $42_9$ du microprocesseur, celui-ci délivre les signaux et l'alimentation électriques dans un ordre déterminé.

Bien entendu, le détecteur de position de la carte pourrait être différent de celui qui est représenté sur la figure 1. Sur la figure 4, l'on a représenté une partie d'un lecteur de cartes utilisant un détecteur optique. Il comprend une source lumineuse 60 disposée d'un côté du couloir 10 et une photodiode 62 disposée de l'autre côté du couloir 10 vis-à-vis de la source 60. La sortie de la photodiode est reliée à un circuit inverseur 64 qui est lui-même relié à un circuit à double seuil 66. La sortie du circuit 66 est reliée l'entrée d'activation $42_9$ du microprocesseur. Ainsi, en l'absence de carte, l'inverseur 64 délivre un signal dont le niveau est inférieur au seuil inférieur défini par le circuit 66. Il n'y a pas de signal de détection. Si la carte masque partiellement la photodiode 62, le signal délivré par l'inverseur 64 a un niveau compris entre les deux seuils définis par le circuit 66. Il y a donc un signal de détection. Enfin, si la carte masque totalement la photodiode 62, le signal délivré par l'inverseur 64 est supérieur au seuil supérieur défini par le circuit 66.

Il n'y a donc plus de signal de détection. On voit ainsi que les deux seuils définissent une plage limitée de positions de la carte pour lesquelles la carte est effectivement reliée aux entrées-sorties du microprocesseur 42 et à l'alimentation électrique 44. Il est important d'observer que dans ce mode de réalisation, il y a une plage de positions de la carte pour laquelle les connexions sont établies. Cette plage, de part et d'autre de la position théorique définie précédemment, correspond bien sûr à une amplitude sensiblement inférieure à la longueur des plages de contact $38_1$ à $38_8$ de la carte selon la direction d'introduction de la carte.

Pour définir une plage de positions de la carte autorisant l'application des signaux électriques aux éléments de contact du lecteur de cartes, on pourrait utiliser un micro-contact présentant une hystérésis et délivrant ainsi sur la ligne 50 un signal de détection pour une plage prédéterminée de positions de la carte.

Pour définir cette plage de positions de la carte, on peut également utiliser deux micro-contacts décalés selon la direction d'introduction de la carte. C'est ce qu'on a représenté sur la figure 5.

Dans le passage d'introduction 10, on trouve deux micro-contacts 70 et 72 qui peuvent être identiques à celui des figures 1 et 2.

Les micro-contacts 70 et 72 sont décalés, selon la direction d'introduction 13 de la carte, d'une longueur $m$ définissant la plage de positions de la carte pour laquelle les signaux peuvent être appliqués aux éléments de contact 20. Chacun des micro-contacts 70 et 72 délivre un signal de détection lorsque le bord antérieur de la carte vient au contact de sa partie sensible. La sortie du micro-contact 72, qui est le plus éloigné de l'entrée du passage d'introduction, est reliée à l'entrée d'un circuit inverseur 74. La sortie du circuit 74 et la sortie du micro-contact 70 sont reliées aux entrées d'une porte ET référencée 76. On comprend que la sortie de la partie ET est au niveau logique un, c'est-à-dire qu'un signal de détection est élaboré, seulement si le bord antérieur de la carte agit sur le micro-contact 70 mais n'agit pas sur le micro-contact 72. Dès que le micro-contact 72 est également activé, le signal de détection disparaît. La sortie de la porte ET 76 est reliée par le conducteur 52 à l'entrée $42_9$ du microprocesseur 42.

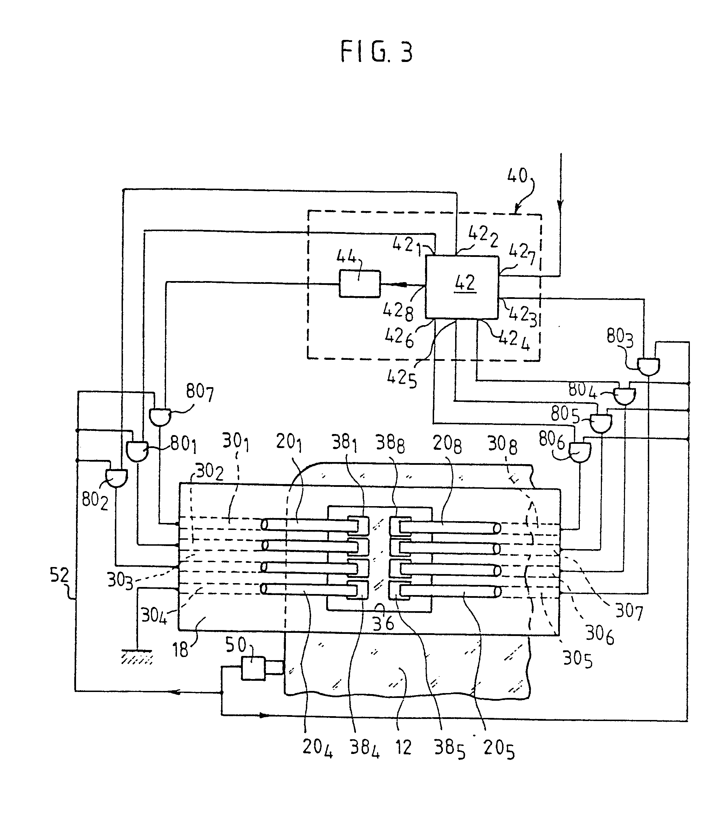

Selon un autre mode de réalisation de l'invention, représenté sur la figure 3, le signal de détection délivré par le détecteur de présence de carte ne sert plus à activer le microprocesseur 42, mais à fermer des interrupteurs montés entre au moins certains des éléments de contacts $20_1$ à $20_3$ et $20_5$ à $20_8$ et les entrées/sorties correspondantes du microprocesseur 42.

Sur la figure 3, on a représenté, sur chacune des lignes reliant les pistes conductrices $30_2$, $30_3$ et $30_5$ à $30_8$ aux entrées/sorties $42_1$ à $42_6$ du microprocesseur 42, un interrupteur commandé. Les interrupteurs sont respectivement référencés $80_1$ à $80_6$. On a également représenté un interrupteur $80_7$ monté entre la piste $30_1$ et la sortie de la source d'alimentation 44. Chaque interrupteur comporte une entrée de commande qui est reliée à la sortie du micro-contact 50 par les lignes référencées globalement 82. En l'absence de signal de détection délivré par le détecteur 50, les interrupteurs $80_1$ à $80_7$ sont ouverts. La liaison entre la source d'alimentation 44 et le microprocesseur 42 d'une part, et les éléments de contact $20_1$ à $20_3$ et $20_5$ à $20_8$ d'autre part, est donc interrompue.

Au contraire, lorsque le signal de détection est présent, les interrupteurs $80_1$ à $80_7$ sont fermés. Ainsi, les signaux électriques peuvent être appliqués au circuit électronique de la carte dans l'ordre convenable déterminé par le microprocesseur 42.

Les interrupteurs $80_1$ à $80_7$ peuvent être constitués par des interrupteurs formés par un circuit électronique commandé par le signal de détection. Ils peuvent également être réalisés à l'aide de micro-relais, etc... Bien entendu, le mode de réalisation de la figure 3 peut être utilisé

EP 0 139 593 B1

7

en combinaison avec les détecteurs de présence de cartes décrits en liaison avec les figures 4 et 5.

## Revendications

1. Appareil de lecture de cartes à mémoire électronique comprenant un passage d'introduction (10) d'une carte (12) munie d'une pluralité de plages de contact électrique (38) et d'un circuit intégré (40) relié aux dites plages, une pluralité d'éléments de contact (20) formés par des éléments conducteurs élastiques fixes et disposés dans ledit passage (10) pour que chacun soit en contact avec une desdites plages de contact (38) lorsque ladite carte est en position de lecture, une source d'alimentation électrique (44) et un circuit de traitement (42) pour envoyer des signaux d'information vers la carte par lesdits éléments de contact électrique, des moyens détecteurs (50, 60, et 62, 70 et 72) disposés à l'intérieur dudit passage (10) pour détecter si ladite carte (12) est dans une position requise, caractérisé en ce que lesdits moyens de détection délivrent un signal électrique de détection lorsque le bord antérieur de ladite carte (12) est dans la position requise et en ce que ledit signal de détection commande l'activation des moyens qui ne sont pas actionnés mécaniquement par la carte (42, $80_1$ à $80_7$) pour appliquer lesdits signaux et/ou ladite alimentation seulement dans le cas où lesdits moyens de détection ont détecté que la carte est dans la position requise pour laquelle la totalité des connnexions électriques entre lesdites plages de contact ($38_1$ à $38_8$) sont effectivement réalisées, par quoi lesdits signaux et/ou ladite alimentation sont effectivement appliqués auxdits éléments de contact dans l'ordre requis.

2. Appareil de lecture selon la revendication 1, caractérisé en ce que lesdits moyens de détection comprennent un contacteur électrique (50) délivrant ce signal électrique de détection et en ce que lesdits moyens d'application comprennent ledit circuit de traitement (42).

## Patentansprüche

1. Lesegerät für elektronische Speicherkarten, umfassend einen Einführdurchlaß (10) einer mit einer Mehrzahl von elektrischen Kontaktfeldern (38) und einem mit den genannten Kontaktfeldern verbundenen integrierten Schaltkreis (40) versehenen Karte (12), eine Mehrzahl von Kontaktelementen (20), gebildet von feststehenden elastischen Leiterelementen und in dem genannten Durchlaß (10) derart angeordnet, daß jedes in Kontakt mit einem der Kontaktfelder (38) steht, wenn die genannte Karte in Leseposition ist, eine elektrische Versorgungsquelle (44) und eine Verarbeitungsschaltung (42) für die Übertragung von Informationssignalen zu der Karte über die genannten elektrischen Kontaktelemente, Detek-

8

tormittel (50, 60, und 62, 70 und 72), angeordnet im Innern des genannten Durchlasses (10) um festzustellen, ob die genannte Karte (12) in einer Soll-Position ist, dadurch gekennzeichnet, daß die genannten Detektormittel ein elektrisches Erfassungssignal abgeben, wenn die Vorderkante der genannten Karte (12) in der Soll-Position ist, und daß das genannte Erfassungssignal die Aktivierung von Mitteln steuert, die nicht mechanisch von der Karte aktiviert werden (42, $80_1$ bis $80_7$) zum Anlegen der genannten Signale und/oder der Versorgung nur in dem Fall, wo die genannten Detektormittel festgestellt haben, daß die Karte in der Sollposition ist, für die die Gesamtheit der elektrischen Verbindungen zwischen den genannten Kontaktfeldern ($38_1$ bis $38_8$) tatsächlich hergestellt ist, wodurch die genannten Signale und/oder die Versorgung tatsächlich an die genannten Kontaktelemente in der Soll-Ordnung angelegt werden.

2. Lesegerät nach Anspruch 1 dadurch gekennzeichnet, daß die genannten Detektormittel einen elektrischen Kontaktgeber (50) umfassen, der das genannte elektrische Erfassungssignal abgibt, und daß die genannten Anlegemittel die genannte Verarbeitungsschaltung (42) umfassen.

## Claims

1. Apparatus for reading electronic memory cards comprising a slot (10) for inserting a card (12) provided with a plurality of electric contact pads, (38) and an integrated circuit (40) connected to said pads a plurality of contact elements (20) formed by flexible conductive elements which are fixed and disposed inside said slot (10) so that each one is in contact with one of said contact pads (38) when said card is in its reading position, an electrical power supply (44) and a processing circuit (42) for delivering information signals to said card via said electric contacts elements, detector means (50, 60, and 62, 70 and 72) disposed inside said slot (10) for detecting if said card (12) is in the required position, characterised in that said detector means deliver an electric detection signal when the front side of said card (12) is in the required position and in that said detection signal controls the activation of means, which are not mechanically operated by the card (42, $80_1$ à $80_7$), for applying said signals and/or said electric supply only when said detectors means have detected that the card is in the required position, wherein all the electric connections between said contact pads ($38_1$ to $38_6$) are effectively realised whereby said signals and/or said electric supply are effectively applied to said contact elements in the required order.

2. Reading apparatus according to claim 1, characterised in that said detector means include an electric contactor (50) delivering said electric detection signal and in that said applying means include said processing circuit (42).

FIG. 1

FIG. 5

FIG. 2

FIG. 4

# FIG. 3